# NEUE EUROPÄISCHE PATENTSCHRIFT

(11) **EP 0 603 152 B2**
(45) Veröffentlichungstag und Bekanntmachung des Hinweises auf die Entscheidung über den Einspruch: **24.01.2001**
(45) Hinweis auf die Patenterteilung: 12.06.1996
(21) Anmeldenummer: 93890234.3
(22) Anmeldetag: 07.12.1993
(51) Int. Cl.: B24B 9/10, C03B 33/023, C03B 33/10

(54) **Vorrichtung zum Schneiden einer Glastafel**
Device for cutting a glass panel
Dispositif pour la découpe d'un panneau de verre

(30) Priorität: 15.12.1992 AT 248092; 04.10.1993 AT 198793
(43) Veröffentlichungstag der Anmeldung: 22.06.1994
(73) Patentinhaber: Lisec, Peter, 3363 Amstetten-Hausmening (AT)
(72) Erfinder: Lisec, Peter, 3363 Amstetten-Hausmening (AT)
(74) Vertreter: Beer, Manfred, Dipl.-Ing.

(56) Entgegenhaltungen:
- DE-A- 4 113 414
- DE-A- 4 118 241
- DE-C- 3 403 682
- GB-A- 2 151 167
- US-A- 4 210 052
- US-A- 4 805 353
- Glaswelt 9/1992, Seite 236

## Beschreibung

Die Erfindung betrifft eine Vorrichtung mit den Merkmalen des einleitenden Teils des unabhängigen Anspruches 1.

Eine derartige Vorrichtung ist aus der Zeitschrift "Glaswelt" 45. Jahrgang, September 1992, Seite 236 bekannt. Bei dieser bekannten Vorrichtung ist auf der Schneidbrücke ein Werkzeugträger mit zwei Werkzeugen, nämlich der Schleifscheibe zum Entschichten und dem Schneidrad zum Schneiden vorgesehen. Bild 1 zeigt, daß die zur Glasscheibe senkrechte Drehachse, um die das Schneidrad verdrehbar ist, mit Abstand von der Achse, um welche die Schleifscheibe verdrehbar ist, angeordnet ist. Mit der bekannten Vorrichtung werden beim Entschichten und Schneiden zuerst die Konturen der Endscheiben entschichtet und anschließend geschnitten. Dies erfolgt so, daß das Schneidmuster in ein Entschichtungsmuster umgewandelt wird und die Schleifscheibe die Konturen abfährt. Danach wird der gleiche Weg mit dem Schneidrad abgefahren. Bei der bekannten Vorrichtung wird, so wie dies aus der DE 41 18 241 A bekannt ist, in zwei getrennten Arbeitsgängen gearbeitet.

Aufgabe der Erfindung ist es, eine Vorrichtung anzugeben, mit der das Schneiden und das Entschichten von beschichteten Glastafeln mit hoher Arbeitsgeschwindigkeit möglich ist und mit der das Schneiden unmittelbar nach dem Entschichten und mit diesem in einem Arbeitsvorgang ausgeführt werden kann. Überdies soll der technische Aufwand der Vorrichtung möglichst gering sein.

Gelöst wird die Aufgabe bei einer gattungsgemäßen Vorrichtung mit den Merkmalen des kennzeichnenden Teils von Anspruch 1.

Mit der erfindungsgemäßen Vorrichtung können praktisch alle vorkommenden rechteckigen Glastafelzuschnitte mit entschichtetem Rand hergestellt werden.

Von Vorteil ist bei der Erfindung, daß das Schleifwerkzeug schwenkbar ist. So kann die Schleif- oder Polierscheibe immer so ausgerichtet werden, daß ihre Drehachse parallel zur Drehachse des Schneidrädchens des Schneidwerkzeuges und somit senkrecht zur Fortbewegungsrichtung desselben ausgerichtet ist. Für den Antrieb des Schleifwerkzeuges ist dabei bevorzugt ein gesonderter Motor vorgesehen.

Bevorzugt wird mit der erfindungsgemäßen Vorrichtung so gearbeitet, daß das Ritzen der Glastafel unmittelbar nach dem Abtragen der Beschichtung ausgeführt wird. Dies hat den Vorteil, daß das beim Schneiden verwendete ölige Schneidhilfsmittel das Entschichten nicht nachteilig beeinflußt.

Bei der Erfindung ist vorgesehen, daß das Schleifwerkzeug und das Schneidwerkzeug voneinander unabhängig von der Auflage weg anhebbar sind. Mit dieser Ausführungsform wird verhindert, daß Teile einer Glastafel in Bereichen entschichtet werden, die nicht im Bereich einer Ritzlinie liegen. Es kann bei dieser Ausführungsform der Erfindung das Abtragen der Beschichtung beiderseits einer Ritzlinie durch Abheben des Schleifwerkzeuges abgebrochen werden, wenn im Inneren der Fläche der Glastafel eine zu der zu erzeugenden Ritzlinie quer verlaufende Ritzlinie erreicht wird, und das Schneiden der Glastafel bis zu diesem Ende der Ritzlinie aber noch fortgesetzt werden. Diese Ausführungsform der Erfindung kommt insbesondere zum Einsatz, wenn das Schleifwerkzeug dem Schneidwerkzeug vorläuft. Mit dieser Ausführungsform kann beispielsweise das Schleifwerkzeug am Beginn einer herzustellenden Ritzlinie abgesenkt werden, worauf sich der Träger des Schleifwerkzeuges und des Schneidwerkzeuges in Richtung der herzustellenden Ritzlinie zu bewegen beginnt. Sobald sich das Schneidwerkzeug am Beginn der herzustellenden Ritzlinie befindet, wird auch dieses abgesenkt und stellt nunmehr im bereits entschichteten Bereich die Ritzlinie her. Am Ende der herzustellenden Ritzlinie wird das Schleifwerkzeug angehoben und das Schneidwerkzeug wird bis zum Ende der Ritzlinie weitergeführt.

Gemäß der Erfindung ist vorgesehen, daß das Schleifwerkzeug gemeinsam mit dem Schneidwerkzeug verschwenkbar ist. Es genügt ein einziger Antriebsmotor, der die Schwenkbewegung der beiden Werkzeuge veranlaßt.

Weitere Merkmale und Vorteile der Erfindung ergeben sich aus den Unteransprüchen sowie der folgenden Beschreibung von Ausführungsbeispielen der Erfindung unter Bezugnahme auf die Zeichnungen.

Es zeigt:
Fig. 1 eine Draufsicht auf einen erfindungsgemäßen Glasschneidetisch,
Fg. 2 im Schnitt eine andere Ausführungsform des Schlittens
Fig. 3 eine Anordnung zum Bestimmen der Abnützung der Schleifscheibe,
Fig. 4 teilweise eine weitere Ausführungsform teilweise geschnitten und in Schrägansicht und
Fig. 5 eine Einzelheit von Fig. 4 in vergrößertem Maßstab.

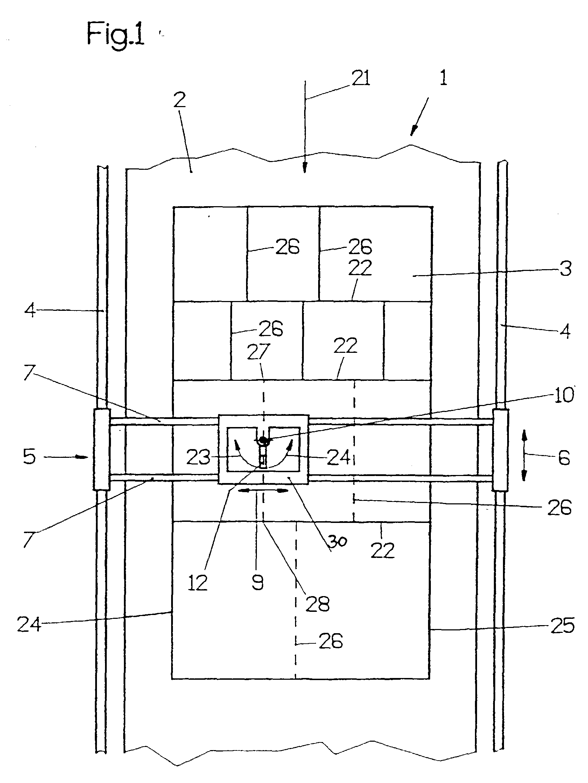

Ein in Fig. 1 dargestellter Glasschneidetisch 1 weist eine Auflage 2 für die zu bearbeitende Glastafel 3 auf. Die Auflage 2 kann als Luftkissentisch, dessen Löcher wahlweise mit Unterdruck beaufschlagt werden können, um eine Glastafel 3 beim Ritzen und Entschichten festzuhalten, ausgebildet sein. Für den An- und Abtransport einer Glastafel 3 können in die Auflage 2 gegebenenfalls versenkbare Transportgurten vorgesehen sein. An beiden Längsrändern der Auflage 2 sind Führungen 4 für einen Balken 5 (Schneidbalken) angeordnet, entlang welcher der Balken 5 in Richtung des Doppelpfeiles 6 verschiebbar geführt ist. Der Balken 5 wiederum besteht aus zwei parallel verlaufenden Führungsschienen 7, auf welchen ein Träger 30 in Richtung des Doppelpfeiles 9 verschiebbar geführt ist.

Am Träger 30 sind um eine gemeinsame Achse 10, die im rechten Winkel zur Glastafelebene ausgerichtet ist, ein Schneidwerkzeug 11 und ein Schleifwerkzeug 12 drehbar bzw. schwenkbar gelagert.

Das Schneidwerkzeug 11 weist ein um eine parallel zur Glastafelebene ausgerichtete Achse 13 drehbares Schneidrad 14 und das Schleifwerkzeug 12 eine um eine parallel zur Glastafelebene ausgerichtete Achse 15 drehbare Schleif-oder Polierscheibe 16 auf.

Die Achsen 13 und 15 des Schneidrades 14 und des Schleifrades 16 sind immer parallel zueinander und im rechten Winkel zur Vorschubrichtung (Pfeil 18) ausgerichtet.

Zum Verschieben des Schneidwerkzeuges 11 und des Schleifwerkzeuges 12 in Richtung der Achse 10 sind nicht dargestellte Antriebseinrichtungen, beispielsweise Druckmittelzylinder, vorgesehen, so daß die Werkzeuge 11, 12 unabhängig voneinander auf die Glastafel 3 abgesenkt bzw. von ihr abgehoben werden können.

Das Schneiden einer Glastafel 3 und das Abtragen einer auf der Glastafel 3 aufgetragenen Beschichtung in einem schmalen Bereich auf beiden Seiten einer Ritzlinie in einem einzigen Arbeitsvorgang kann unter Bezugnahme auf Fig. 1 beispielsweise wie folgt durchgeführt werden.

In einem ersten Arbeitsschritt vor Beginn des Schneidens und des Abtragens der Beschichtung wird eine Glastafel 3 in Richtung des Pfeiles 21 in Längsrichtung auf den Glasschneidetisch 1 transportiert. Anschließend werden die Ritzlinien 22 erzeugt und gleichzeitig die Beschichtung im Bereich der Ritzlinien 22 durch das Schleifwerkzeug 12 abgetragen. Dies erfolgt bevorzugt so, daß das Schleifwerkzeug 12 dem Schneidwerkzeug 11 in Bewegungsrichtung des Trägers 30 quer zur Längserstreckung des Glässchneidetisches 1 vorauseilt. Dazu wird das Schleifwerkzeug 12 abwechselnd um die Achse 10 in Richtung der Pfeile 23 und 24 geschwenkt. Gleichzeitig wird auch das Schneidwerkzeug 11 so gedreht, daß die Achsen 13, 15 der Werkzeuge 11, 12 immer parallel zur Längserstreckung des Glässchneidetisches 1 und quer zur Bewegungsrichtung des Trägers 30 ausgerichtet sind. Ein zeitweiliges Anheben des Schneidwerkzeuges 11 oder des Schleifwerkzeuges 12 ist hier nicht unbedingt erforderlich, da die Werkzeuge an den Längsrändern 24, 25 problemlos auslaufen können.

Anschließend werden die Ritzlinien 26 hergestellt, wobei in Fig. 1 bereits hergestellte Ritzlinien 26 mit durchgehenden Strichen und noch herzustellende Ritzlinien 26 in strichlierter Form dargestellt sind. Da die Ritzlinien 26 im Inneren der Glastafel 3 an quer verlaufenden Ritzlinien 22 enden, muß darauf geachtet werden, daß die Ritzlinien 26 einerseits genau an den quer dazu verlaufenden Ritzlinien 22 enden und daß anderseits nur der enge Bereich neben den Ritzlinien 26 entschichtet wird, also mit dem Schleifwerkzeug 12 nicht über die betroffene Ritzlinie 22 hinausgefahren wird. Dies erfolgt so, daß am Beginn 27 einer Ritzlinie 26 das zunächst von der Glastafel 3 abgehobene Schleifwerkzeug 12 auf die Glastafel 3 abgesenkt wird, wenn sich die Achse 15 des Schleifwerkzeuges 12 über der Ritzlinie 22 befindet. Der Träger 30 bewegt sich dann in Richtung des Pfeiles 21 vorwärts, bis sich die Achse 13 des Schneidwerkzeuges 11 über der Ritzlinie 22 befindet. Nun wird auch das Schneidwerkzeug 11 abgesenkt. Der Träger 30 bewegt sich dann weiter, bis sich die Achse 15 des Schleifwerkzeuges 12 am Ende 28 einer Ritzlinie 26, d.h. über einer weiteren Ritzlinie 22 befindet. Das Schleifwerkzeug 12 wird von der Glastafel 3 abgehoben und der Träger 30 bewegt sich weiter, bis sich die Achse 13 des Schneidwerkzeuges 11 ebenfalls über der Ritzlinie 22 befindet. Nun wird auch das Schneidwerkzeug 11 von der Glastafel 3 abgehoben und der Träger 30 kann zur nächsten herzustellenden Ritzlinie 26 bewegt werden.

Der Träger 30 ist über je zwei auf beiden Seiten des Trägers 30 vorgesehene Gleitschuhe 31 auf Führungen 32, die auf der Oberseite der Führungsscheinen 7 montiert sind, verschiebbar. Die miteinander auf nicht gezeigte Art und Weise verbundenen Führungsschienen 7 sind ähnlich wie bei der Anordnung von Fig. 1 in Richtung des Doppelpfeiles 6 (X-Achse) über Führungen 4 an beiden Rändern des Glasschneidetisches 1 verschiebbar. Für das Verstellen des Trägers 30 entlang der Führungsschienen 7 (Richtung des Doppelpfeiles 9, Y-Achse) kann auf einer oder beiden Führungsschienen 7 eine Zahnstange montiert sein, in die ein von einem am Träger 30 montierten Antriebsmotor (nicht gezeigt) angetriebenes Ritzel eingreift. Die Gleitschuhe 31 sind an einer oberen Platte 33 der Grundeinheit des Trägers 30 montiert. Die Platte 33 begrenzt zusammen mit Seitenwänden 34 und einer unteren Abschlußplatte 35 einen geschlossenen Raum 36 im Träger 30.

An der aus den genannten Bauteilen 33, 34 und 35 gebildeten Grundeinheit des Trägers 30 ist eine um die Achse 10 verdrehbare Dreheinheit 38 gelagert. Die Dreheinheit 38 besteht aus einer oberen Platte 39, die an ihrem äußeren Umfangsrand eine Zahnung 40 aufweist, mit der ein Ritzel 41 kämmt, das von einem an der oberen Platte 33 der Grundeinheit befestigten Antriebsmotor 42 angetrieben wird. Durch den Antrieb 41, 42 kann die Dreheinheit 38 um die Achse 10 um beliebige Winkel (für gewöhnlich 90°) verdreht werden.

Die Dreheinheit 38 trägt das Schneidwerkzeug 11 mit einem Schneidrad 14 über eine als Pneumatikzylinder ausgebildete Heb- und Senkeinheit 45, die an der oberen Platte 39 der Dreheinheit 38 befestigt ist. Der Träger 46 für das Schneidwerkzeug 11 durchsetzt ein topfförmiges Gehäuse 47 und ragt durch eine Öffnung 49 im Boden 48 des topfförmigen Gehäuses 47. Das topfförmige Gehäuse 47 ist an der oberen Platte 39 der Dreheinheit 38 befestigt.

An der Außenwand des topfförmigen Gehäuses 47 ist über eine Platte 50 ein Antriebsmotor 51 für die Schleifscheibe 16 des Schleifwerkzeuges 12 befestigt, so daß dieser zusammen mit der Dreheinheit 38 und dem Schneidwerkzeug 11 um die Achse 10 schwenkt, wenn der Antrieb 41, 42 in Betrieb gesetzt ist.

Am Gehäuse des Antriebsmotors 51 für die Schleifscheibe 16 ist verschwenkbar ein Arm 52 montiert, an dessen freiem Ende die Schleifscheibe 16 drehbar gelagert ist. Der Arm 52 trägt weiters ein Gehäuse 55, das die Schleifscheibe 16 bis auf deren untersten, auf einer zu bearbeitenden Glastafel 3 angreifenden Bereich abdeckt.

Für den Antrieb der Schleifscheibe 16 dient ein Antrieb aus einem Zahnriemen 56 und zwei Zahnrädern 57 und 58.

An einem vom Arm 52 nach oben weisenden Ansatz 60 greift das freie Ende der Kolbenstange eines Pneumatikzylinders 61 an, der an der unteren Endplatte 35 der Dreheinheit 38 abgestützt ist.

An der unteren Platte 35 der Dreheinheit 38 ist weiters eine Zugfeder 62 befestigt, deren anderes Ende am Arm 52 bei 63 angreift und den Arm 52 im Sinne eines Abhebens der Schleifscheibe 16 von der zu bearbeitenden Glastafel 3 belastet.

Zum Anpressen der Schleifscheibe 13 an die zu bearbeitende Glastafel 3 dient vorzugsweise eine Anordnung aus drei nebeneinander angeordneten Druckmittelmotoren (Pneumatikzylinder), die so wie der Druckmittelmotor 61 ausgerichtet sind, wobei zwei Pneumatikzylinder für den Anpreßdruck sorgen und der dritte Pneumatikzylinder als Stellzylinder dient.

Bei nicht mit Druckmittel beaufschlagten Pneumatikzylinder(n) 61 wird die Schleifscheibe 13 von der Zugfeder 62 von der Glastafel 3 abgehoben.

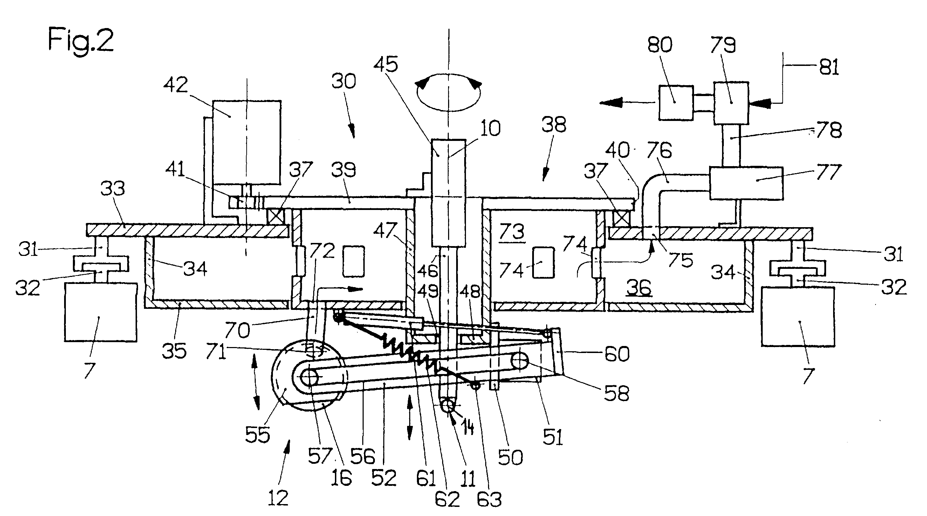

An eine Seitenwand (in Fig. 2 die dem Betrachter abgewendete Seitenwand) des Gehäuses 55 der Schleifscheibe 16 ist im Bereich einer Öffnung 71 ein flexibler Schlauch 70 angeschlossen. Das andere Ende des Schlauches 70 ist im Bereich einer Öffnung 72 mit der unteren Endplatte 35 der Dreheinheit 38 verbunden. Der Innenraum 73 der Dreheinheit 38 steht über Öffnungen 74 mit dem Raum 36 in der Grundeinheit des Trägers 30 in Verbindung. An die obere Endplatte 33 der Grundeinheit des Trägers 30 ist im Bereich einer Öffnung 75 ein Rohr 76 angeschlossen, das zu einem Luftfilter 77 führt. Das Luftfilter 77 steht an seinem Ausgang über ein Verbindungsstück 78 mit einer Einrichtung 79 zum Erzeugen von Unterdruck in Verbindung. Die Einrichtung 79 zum Erzeugen von Unterdruck arbeitet vorzugsweise nach dem Injektorprinzip, weshalb an sie eine Druckluftleitung 81 angeschlossen ist. Über ein Endfilter 80 tritt aus dem Abdeckgehäuse 55 der Schleifscheibe 16 abgesaugte Luft und die über die Leitung 81 zugeführte Druckluft aus.

Durch die beschriebene Art der Absaugung von Schleifstaub, der entsteht, wenn die Schleifscheibe von einer Glastafel 3 eine Beschichtung abträgt, wird die freie Drehbarkeit der Dreheinheit 38 nicht behindert.

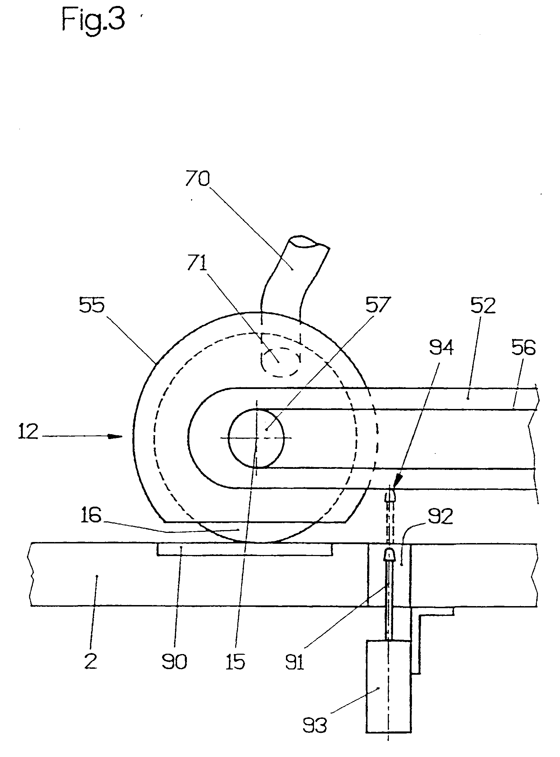

Bei der in Fig. 2 gezeigten Ausführungsform läuft die Schleifscheibe 13 dem Schneidwerkzeug 11 vor, d.h. daß zuerst eine auf der Glastafel 3 aufgetragene Beschichtung streifenweise abgetragen wird, bevor das Schneidwerkzeug 11 die Glastafel 3 ritzt. Das Schleifwerkzeug 12 und das Schneidwerkzeug 11 sind bei der in Fig. 3 gezeigten Ausführungsform unabhängig voneinander auf die Glastafel ansetzbar und von dieser wieder abhebbar, werden aber stets gemeinsam geschwenkt, da beide auf der um die Achse 10 verdrehbaren Dreheinheit 38 montiert sind.

Die Drehrichtung der Schleifscheibe 16 wird so gewählt, daß sie sich im Bereich ihres Angriffspunktes auf der zu bearbeitenden Glastafel 3 entgegen der Bewegungsrichtung des Trägers 30 bewegt.

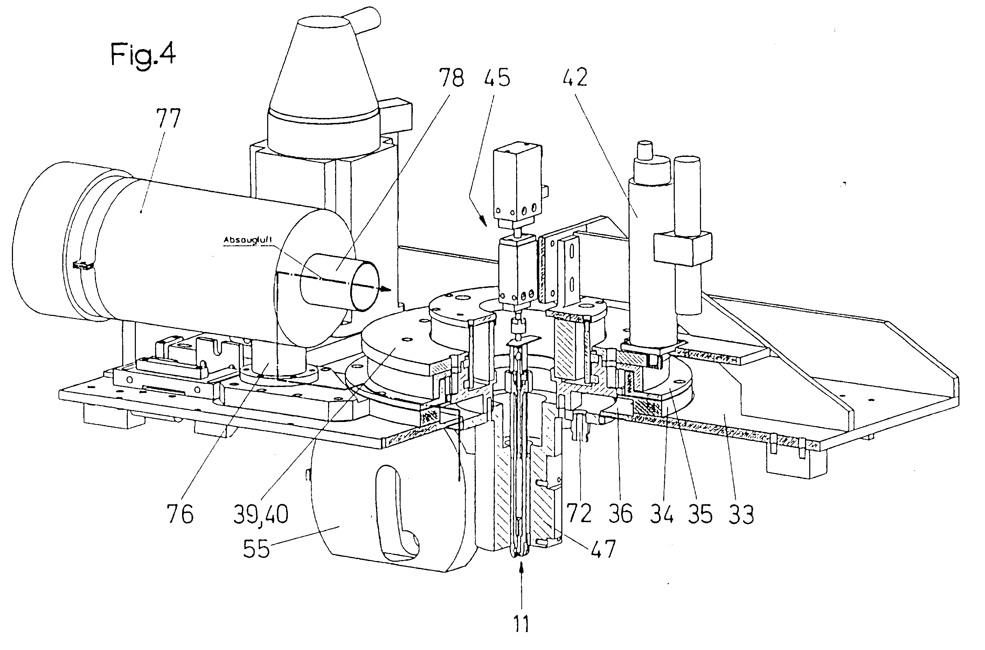

Um die Abnützung der Schleifscheibe 16 zu erfassen, d.h. ihren wirksamen Radius festzustellen, ist - vgl. Fig. 3 - an einer Stelle der Auflage 2 des Glasschneidetisches 1 in diese mit der Oberseite der Auflage 2 fluchtend eine Platte 90 aus gehärtetem Metall oder einem anderen abriebfesten Werkstoff eingelassen. Im Bereich dieser Platte 90 ist ein Tastfinger 91 vorgesehen, der durch eine Öffnung 92 in der Auflage 2 oder in der Platte 90 ragt und in der in Fig. 4 gezeigten Bereitschaftsstellung über die Oberseite der Auflage 2 nicht vorsteht. Mit dem anhebbaren Tastfinger 91 ist eine Vorrichtung (Meßlineal) 93 gekuppelt, die den Weg, um den der Tastfinger 91 angehoben worden ist, erfaßt.

Um den wirksamen Durchmesser der Schleifscheibe 16, also indirekt deren Abnützung zu bestimmen, wird die Schleifscheibe 16 durch entsprechendes Bewegen des Trägers 30 in den Bereich der gehärteten Platte 90 bewegt und auf diese aufgesetzt. Hierauf wird der Tastfinger 91 angehoben, bis er an einer definierten Stelle 94 des die Schleifscheibe 16 tragenden Armes 52 oder einem mit dem Arm 52 verbundenen Anschlag anliegt. Durch das Meßlineal 93 wird der Hub des Tastfingers 91 bis er am Arm 52 anliegt, bestimmt und daraus der wirksame Radius der Schleifscheibe 16 ermittelt.

Die Steuerung des Motors 51 für den Drehantrieb der Schleifscheibe 16 wird entsprechend dem wirksamen Durchmesser der Schleifscheibe 16 immer so gewählt, daß deren Umfangsgeschwindigkeit, also die Geschwindigkeit, mit der sich der Umfang der Schleifscheibe 16 relativ zur zu bearbeitenden Glastafel 3 bewegt, auf einen konstanten Wert eingestellt ist, der sich auch bei zunehmender Abnützung der Schleifscheibe 16 nicht ändert (die Drehzahl wird bei Abnützung der Schleifscheibe entsprechend dem Abnützungsgrad gesteigert).

Es ist noch darauf hinzuweisen, daß bei der in Fig. 2 gezeigten Ausführungsfsorm die Mittelebene der Schleifscheibe 13, die senkrecht zu ihrer Drehachse 15 steht, in allen Stellungen durch die Drehachse 10, um die auch das Schneidwerkzeug 11 verdrehbar ist, geht.

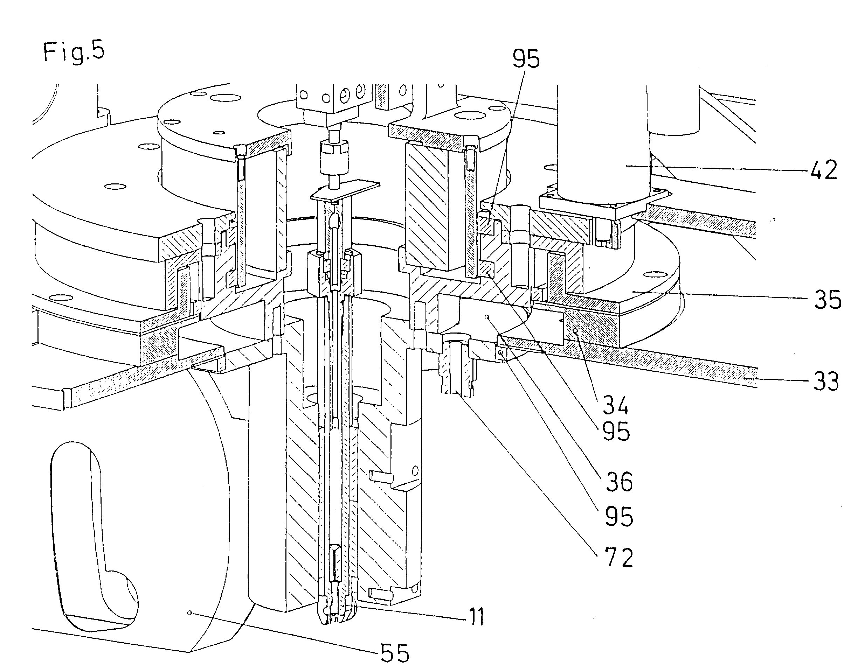

Die Fig. 5 und 6 zeigen beispielsweise eine praktische Ausführung der im Prinzip an Hand der Fig. 3 erläuterten Ausführungsform. Durch die besondere Konstruktion des Topfes 47 wird der Schaft 46 des Schneidwerkzeuges 11 in Richtung der Achse 10 verstellbar, jedoch auf Drehung gekuppelt aufgenommen. Im Schaft 46 des Schneidwerkzeuges ist zwischen dem Hebe-Antrieb 45 und der Öffnung 49 im Topf 47 eine Drehkupplung vorgesehen.

Bei der Ausführungsform der Fig. 4 und 5 sind die Räume 73 und 36 in einem ausgebildet und dienen als Saugkammer, die teils vom Träger 30 und teils von der Dreheinheit 38 begrenzt wird. Zwischen den aneinandergrenzenden Bauteilen des rotierenden und des stationären Teils sind Dichtungen 95, z.B. Labyrinthdichtungen, vorgesehen.

Zusammenfassend kann die Erfindung beispielsweise wie folgt dargestellt werden:
Um das Schneiden einer Glastafel 3 mit Hilfe eines Schneidwerkzeuges 11 und das Abtragen einer auf der Glastafel 3 aufgetragenen Beschichtung mit Hilfe eines Schleifwerkzeuges 12 zu vereinfachen und zu verkürzen, wird das Ritzen der Glastafel 3 und das Abtragen der Beschichtung in beiderseits der Ritzlinien liegenden, zu diesen parallel verlaufenden Streifen in einem einzigen Arbeitsvorgang ausgeführt. Bei der hiefür vorgeschlagenen Vorrichtung sind das Schneidwerkzeug 11 und das Schleifwerkzeug 12 an einem gemeinsamen, an einem Balken 5 über einer Auflage 2 für die Glastafel 3 verfahrbaren Träger 30 montiert. Das Schleifwerkzeug 12 ist um die senkrecht zur Auflage 2 ausgerichtete Achse 10 des Schneidwerkzeuges 11 verschwenkbar. Das Schleifwerkzeug 12 und das Schneidwerkzeug 11 können voneinander unabhängig von der Glastafel 3 abgehoben und auf dieser aufgesetzt werden. Weiters ist eine Absaugung von beim Entfernen der Beschichtung von der Glastafel 3 anfallenden Staub vorgesehen.

## Patentansprüche

1. Vorrichtung mit einem Schneidwerkzeug (11) mit einem Schneidrad (14) zum Schneiden einer Glastafel (3), wobei das Schneidrad (14) um eine zu einer Auflage (2) für die zu bearbeitende Glastafel (3) senkrechte Achse (10) verdrehbar ist, mit einem um eine zur Auflage (2) senkrechte Achse (10) verdrehbaren Schleifwerkzeug (12) mit einer Schleif- oder Polierscheibe (16) zum Abtragen einer auf der Glastafel (3) aufgetragenen Beschichtung von der Glastafel (3) in beiderseits der Ritzlinien (22, 26) liegenden und zu diesen parallel verlaufenden Streifen, mit einem Balken (5), der über der Auflage (2) an den Rändern derselben geführt verfahrbar ist, wobei das Schneidwerkzeug (11) und das Schleifwerkzeug (12) an einem gemeinsamen, am Balken (5) verfahrbaren Träger (30) montiert und voneinander unabhängig von der Auflage (2) weg anhebbar sind, dadurch gekennzeichnet, daß der Träger (30) eine Grundeinheit (33, 34, 35) und eine in der Grundeinheit (33, 34, 35) verdrehbar gelagerte Dreheinheit (38) aufweist, daß der Balken (5) aus zwei zueinander parallel verlaufenden, miteinander verbundenen Führungsschienen (7) besteht, daß die Grundeinheit (33, 34, 35) des Trägers (30) am Balken (5) auf den Führungsschienen (7) verschiebbar geführt ist, daß das Schneidwerkzeug (11) und das Schleifwerkzeug (12) an der Dreheinheit (38) montiert sind, daß die Dreheinheit (38) in der Grundeinheit (33, 34, 35) des Trägers (30) um die Achse (10) verdrehbar gelagert ist, um die das Schneidwerkzeug (11) und das Schleifwerkzeug (12) gemeinsam verdrehbar sind, daß die Schleif- oder Polierscheibe (16) des Schleifwerkzeuges (12) drehbar an einem Arm (52) gelagert ist, der an der Dreheinheit (38) um eine zur Achse (10) senkrechte Achse verschwenkbar gelagert ist, und daß die Drehachse (13) des Schneidrades (14) stets parallel zur Drehachse (15) der Schleif- oder Polierscheibe (16) ausgerichtet ist.

2. Vorrichtung nach Anspruch 1, dadurch gekennzeichnet, daß die Schleif- oder Polierscheibe (16) des Schleifwerkzeuges (12), bezogen auf die Bewegungsrichtung (18) des Schneidwerkzeuges (11) entlang der Glastafel (3) vor diesem angeordnet ist.

3. Vorrichtung nach Anspruch 1 oder 2, dadurch gekennzeichnet, daß, den Hebeeinrichtungen (45, 61, 62) des Schneidwerkzeuges (11) und des Schleifwerkzeuges (12) eine Steuerung zugeordnet ist, die mit dem Schneidprogramm verknüpft ist, und daß die Steuerung die Antriebe für das Anheben des Schneidwerkzeuges (11) und des Schleifwerkzeuges (12) ansteuert, wenn diese das Ende (28) einer erzeugten oder zu erzeugenden Ritzlinie (26) im Inneren der Glastafel (3) erreichen.

4. Vorrichtung nach einem der Ansprüche 1 bis 3, dadurch gekennzeichnet, daß zwischen der Dreheinheit (38) und dem Arm (52) eine Zugfeder (62) gespannt ist, die den Arm (52) im Sinne eines Abhebens der Schleif- oder Polierscheibe (16) von der Glastafel (3) belastet.

5. Vorrichtung nach einem der Ansprüche 1 bis 4, dadurch gekennzeichnet, daß zwischen der Dreheinheit (38) und einem außerhalb des Schwenkpunktes des Armes (52) angeordneten Angriffspunkt (60) des Armes (52) wenigstens ein Druckmittelmotor (61) zum Andrücken der Schleif- oder Polierscheibe (16) an die Glastafel (3) vorgesehen ist.

6. Vorrichtung nach Anspruch 5, dadurch gekennzeichnet, daß drei Druckmittelzylinder (61), insbesondere Pneumatikzylinder, vorgesehen sind, von welchen zwei die Anpreßkraft aufbringen und der dritte als Stellzylinder das Ausmaß des Absenkens der Schleif- oder Polierscheibe (16) bestimmt.

7. Vorrichtung nach einem der Ansprüche 1 bis 6, dadurch gekennzeichnet, daß die Dreheinheit (38) einen Hohlraum (73) aufweist, in den ein flexibler Schlauch (70) mündet, der mit seinem anderen Ende an ein Gehäuse (55) angeschlossen ist, welches die Schleif- oder Polierscheibe (16) bis auf deren in der Gebrauchslage untersten Bereich abdeckt.

8. Vorrichtung nach Anspruch 7, dadurch gekennzeichnet, daß in den den Hohlraum (73) in der Dreheinheit (38) umgrenzenden Wänden wenigstens eine Durchgangsöffnung (74) vorgesehen ist, die den Hohlraum (73) mit einem in der Grundeinheit (33, 34, 35) des Trägers (30) vorgesehenen Hohlraum (36) verbindet.

9. Vorrichtung nach Anspruch 8, dadurch gekennzeichnet, daß an den Hohlraum (36) in der Grundeinheit(33, 34, 35)) eine Leitung (76) angeschlossen ist, die an ihrem anderen Ende vorzugsweise über ein Filter (77) mit einer Einrichtung (79) zum Erzeugen von Unterdruck verbunden ist.

10. Vorrichtung nach Anspruch 9, dadurch gekennzeichnet, daß die Einrichtung (70) zum Erzeugen von Unterdruck eine nach dem Injektorprinzip arbeitende Vorrichtung ist.

11. Vorrichtung nach einem der Ansprüche 1 bis 10, dadurch gekennzeichnet, daß an der Oberseite der Dreheinheit (38) eine kreisrunde Platte (39) vorgesehen ist, die an der oberen Endplatte (33) der Grundeinheit (33, 34, 35) vorzugsweise über ein Wälzlager (37) drehbar gelagert ist.

12. Vorrichtung nach Anspruch 11, dadurch gekennzeichnet, daß die Platte (39) der Dreheinheit (38) an ihrem Außenumfang einen Zahnkranz aufweist, der mit einem Antriebsritzel kämmt, das mit einem Motor (42) zum Verdrehen der Dreheinheit (38) um die Achse (10) gekuppelt ist.

13. Vorrichtung nach Anspruch 11 oder 12, dadurch gekennzeichnet, daß der Träger (46) für das Schneidwerkzeug (11) einen hülsenförmigen Körper (47) durchsetzt, der mit der oberen Platte (39) der Dreheinheit (38) verbunden ist.

14. Vorrichtung nach einem der Ansprüche 1 bis 13, dadurch gekennzeichnet, daß in der Auflage (2) für die zu bearbeitende Glastafel (3) eine Platte (90) aus gehärtetem Werkstoff eingelassen ist, deren Oberseite mit der Oberseite der Auflage (2) fluchtet, daß ein Tastfinger (91) vorgesehen ist, der eine Ausnehmung (92), die vorzugsweise im Bereich der Platte (90) vorgesehen ist, durchgreift, daß der Tastfinger mit einem Meßlineal (93) verbunden ist, und daß der Tastfinger (91) mit einem Antrieb für sein Anheben bis in Anlage an einen definierten Punkt (94) des Armes (52), der die Schleif- oder Polierscheibe (16) trägt, gekuppelt ist.

15. Vorrichtung nach einem der Ansprüche 1 bis 14, dadurch gekennzeichnet, daß der Antriebsmotor (51) für die Schleif- oder Polierscheibe (16) in Abhängigkeit von deren wirksamen Umfang so geregelt wird, daß ihre Umfangsgeschwindigkeit konstant ist und sich auch bei Verringerung des wirksamen Durchmessers der Schleif- oder Polierscheibe (16) nicht ändert.

## Claims

1. A device for cutting a glass sheet (3) with the aid of a cutting tool (11) which can turn about an axis perpendicular to a bed (2) for the glass sheet (3) to be worked and for stripping off a coating carried by the glass sheet with the aid of a grinding tool (12), which strips off from the glass sheet (3) strips of the coating lying to the two sides of and parallel to the score lines (22, 26), with a beam (5) which is guided at the edges of the bed (2) to move thereover, and with a cutting tool (11) and a grinding tool (12) which are guided on the beam (5) to move along the same, characterized in that the cutting tool (11) and the grinding tool (12) are mounted on a common support (8) movable on the beam (5) and in that the grinding tool (12) can turn about an axis (10) aligned perpendicular to the bed (2).

2. A device according to claim 1, characterized in that the grinding tool (12) is fixed on an auxiliary support (17), which can turn about an axis aligned perpendicular to the bed (2).

3. A device according to claim 1 or 2, characterized in that the grinding tool (12) can turn together with the cutting tool (11) about the axis (10) about which the cutting tool (11) can turn.

4. A device according to claim 1 or 2, characterized in that the grinding tool (12) and the cutting tool (11) can be lifted away from the bed (2) independently of one another.

5. A device according to any of claims 1 to 4, characterized in that a driver is provided for rotating the cutting tool (11) and a driver independent therefrom is provided for rotating the grinding tool (12).

6. A device according to claim 3 or 4, characterized in that a common driver is provided for rotating the cutting tool (11) and the grinding tool (12).

7. A device according to any of claims 1 to 6, characterized in that the support (8) on the beam (5) is guided on two guide rails running parallel to one another.

8. A device according to any of claims 1 to 7, characterized in that a cutting wheel (14) is provided as the cutting tool (11) and in that the axis of rotation (13) of the cutting wheel (14) runs parallel to the axis of rotation (15) of the grinding or polishing disc (16) of the grinding tool (12).

9. A device according to any of claims 1 to 8, characterized in that the grinding tool (12) is arranged along the glass sheet (3) ahead of the cutting tool (11) in relation to the direction of movement (18) thereof along the glass sheet.

10. A device according to any of claims 1 to 9, characterized in that a control means is associated with the lifting devices of the cutting tool (11) and the grinding tool (12) and is combined with a cutting program and in that the control of the drivers for lifting the cutting tool (11) and the grinding tool (12) is effected when they reach the end (28) of a score line (26) which has been made or is to be made in the interior of the glass sheet (3).

11. A device according to any of claims 2, 5 to 8 and 10, characterized in that the cutting tool (11) and grinding tool (12) are mounted on a rotary unit (38) which is mounted to rotate about the axis (10) in the base body of the support (30).

12. A device according to claim 11, characterized in that the grinding tool (12) is mounted on an arm (52) which can pivot about an axis perpendicular to the axis of rotation (10), where the central plane of the grinding tool (13) perpendicular to the axis of rotation of the grinding or polishing disc of the grinding tool (13) passes through the axis (10).

13. A device according to claim 11 or 12, characterized in that a tension spring (62) is stretched between the rotary unit (38) and the arm (52) and biases the grinding tool (12) in the sense to lift it off the glass sheet.

14. A device according to any of claims 11 to 13, characterized in that at least one pressure medium motor (61) is provided between the rotary unit (38) and a point of engagement (60) of the arm (52) arranged outside the pivot point of the arm (52), for pressing the grinding tool (12) on to the glass sheet.

15. A device according to claim 14, characterized in that three pressure medium cylinders (61), especially pneumatic cylinders are provided, of which two apply the force of application and the third as a positioning cylinder determines the degree of lowering the grinding tool (13).

## Revendications

1. Dispositif pour la découpe d'un panneau de verre (3) à l'aide d'un outil de coupe (11) qui est orientable autour d'un axe perpendiculaire à un élément de soutien (2) pour le panneau de verre (3) à découper, et pour l'enlèvement d'un revêtement appliqué sur le panneau de verre, à l'aide d'un outil de meulage (12) qui enlève le revêtement du panneau de verre (3) suivant des bandes situées de part et d'autre des lignes de rayage (22, 26) et s'étendant parallèlement à ces dernières, comprenant une poutre (5) qui est guidée de façon déplaçable au-dessus du support (2), sur les bords de ce dernier, et un outil de coupe (11) ainsi qu'un outil de meulage (12) qui sont guidés sur la poutre (5) de façon déplaçable le long de cette dernière, caractérisé par le fait que l'outil de coupe (11) et l'outil de meulage (12) sont montés sur un support (8) commun, déplaçable sur la poutre (5) et que l'outil de meulage (12) est pivotant autour d'un axe (10) orienté perpendiculairement à l'élément de soutien (2).

2. Dispositif suivant la revendication 1, caractérisé par le fait que l'outil de meulage (12) est fixé à un support auxiliaire (17) qui est pivotant autour d'un axe orienté perpendiculairement à l'élément de soutien (2).

3. Dispositif suivant la revendication 1 ou 2, caractérisé par le fait que l'outil de meulage (12) est pivotant, conjointement avec l'outil de coupe (11), autour de l'axe (10) autour duquel l'outil de coupe (11) est orientable.

4. Dispositif suivant l'une des revendications 1 à 2, caractérisé par le fait que l'outil de meulage (12) et l'outil de coupe (11) peuvent être soulevés de l'élément de soutien (2) indépendamment l'un de l'autre.

5. Dispositif suivant l'une des revendications 1 à 4, caractérisé par le fait qu'il comprend un système d'entraînement pour le pivotement de l'outil de coupe (11) et un système d'entraînement indépendant du premier pour le pivotement de l'outil de meulage (12).

6. Dispositif suivant la revendication 3 ou 4, caractérisé par le fait qu'il comprend un système d'entraînement commun pour le pivotement de l'outil de coupe (11) et de l'outil de meulage (12).

7. Dispositif suivant l'une des revendications 1 à 6, caractérisé par le fait que le support (8) est guidé sur la poutre (5) sur deux rails de guidage (7) parallèles l'un à l'autre.

8. Dispositif suivant l'une des revendications 1 à 7, caractérisé par le fait que l'outil de coupe (11) comprend une molette de coupe (14) et que l'axe de rotation (13) de la molette de coupe (14) s'étend parallèlement à l'axe de rotation (15) de la meule ou roue de polissage (16) de l'outil de meulage (12).

9. Dispositif suivant l'une des revendications 1 à 8, caractérisé par le fait que vu dans le sens de déplacement (18) de l'outil de coupe (11) le long du panneau de verre (3), l'outil de meulage (12) est disposé en avant de l'outil de coupe (11).

10. Dispositif suivant l'une des revendications 1 à 9, caractérisé par le fait qu'une commande couplée avec le programme de coupe est associée aux dispositifs de soulèvement de l'outil de coupe (11) et de l'outil de meulage (12) et que la commande agit sur les systèmes d'entraînement pour le soulèvement de l'outil de coupe (11) et de l'outil de meulage (12) lorsque ces outils atteignent la fin (28) d'une ligne de rayage (26) produite ou à produire à l'intérieur du panneau de verre (3).

11. Dispositif suivant l'une des revendications 2, 5 à 8 et 10, caractérisé par le fait que l'outil de coupe (11) et l'outil de meulage (12) sont montés sur une unité d'orientation (38) montée de façon orientable autour de l'axe (10) dans le corps de base du support (30).

12. Dispositif suivant la revendication 11, caractérisé par le fait que l'outil de meulage (12) est monté sur un bras (52) pivotant autour d'un axe perpendiculaire à l'axe d'orientation (10), le plan médian de l'outil de meulage (13), qui est perpendiculaire à l'axe de rotation de la meule ou roue de polissage de l'outil de meulage (12), passant par l'axe d'orientation (10).

13. Dispositif suivant la revendication 11 ou 12, caractérisé par le fait qu'un ressort de traction (62) tendu entre l'unité d'orientation (38) et le bras (52) sollicite l'outil de meulage (12) dans le sens d'un soulèvement par rapport au panneau de verre.

14. Dispositif suivant l'une des revendications 11 à 13, caractérisé par le fait qu'au moins un moteur à fluide sous pression (61) est prévu, en vue de l'appui de l'outil de meulage (12) contre le panneau de verre, entre l'unité d'orientation (38) et un point (63) du bras (52) situé en dehors de l'axe de pivotement du bras (52).

15. Dispositif suivant la revendication 14, caractérisé par le fait qu'il comprend trois vérins (61) à fluide sous pression, en particulier des vérins pneumatiques, dont deux fournissent la force d'appui et dont le troisième, en tant que vérin de réglage, détermine l'amplitude d'abaissement de l'outil de meulage (13).
